Europäisches Patentamt

European Patent Office

Office européen des brevets

(11) Publication number: **0 042 203**
**B1**

# EUROPEAN PATENT SPECIFICATION

(45) Date of publication of patent specification: **07.08.85**

(51) Int. Cl.⁴: **G 01 S 13/04, G 01 S 13/52**

(21) Application number: **81301390.1**

(22) Date of filing: **31.03.81**

(54) Polarization ratiometry object detection system and method.

(30) Priority: **16.04.80 US 140868**

(43) Date of publication of application:
**23.12.81 Bulletin 81/51**

(45) Publication of the grant of the patent:
**07.08.85 Bulletin 85/32**

(84) Designated Contracting States:
**AT BE DE FR GB IT NL SE**

(56) References cited:
**DE-A-1 804 896**
**US-A-3 772 689**
**US-A-4 055 425**

(73) Proprietor: **ELINT CORPORATION**
**5001A West Waters Avenue**
**Tampa Florida 33641 (US)**

(72) Inventor: **Charlot Jr, Lincoln H.**
**3916 Wisconsin Avenue**
**Tampa, Florida 33616 (US)**

(74) Representative: **Wilson, Nicholas Martin et al**
**WITHERS & ROGERS 4 Dyer's Buildings Holborn**
**London EC1N 2JT (GB)**

Courier Press, Leamington Spa, England.

## Description

Background of the invention

The present invention generally pertains to communications systems and methods, and is particularly directed to detection of objects having preferential polarization plane reflection characteristics.

It often is desired to detect the presence of human beings, especially when the humans are within restricted areas. It also is desired to be able to detect other objects, such as guided missiles or aircraft flying parallel to the Earth's surface at relatively low altitudes.

Detection systems based upon the well known Doppler principle are capable of detecting human movement. Doppler systems detect a moving object by sensing a shift in the frequency of microwave energy reflected from the moving object. However, Doppler system also detect blowing rain, snow and sand, waving grass and other moving environmental objects and provides the same type of indications upon detecting such environmental objects as when a moving human is detected.

Conventional radar systems located in a space satellite or a high-flying aircraft are not capable of detecting guided missiles flying at low altitudes parallel to the Earth's surface because the intensity of microwave energy reflections due to environmental ground clutter is comparable to the intensity of the microwave energy reflections from a missile, whereby such reflections are virtually indistinguishable from each other. One state-of-the-art technique for distinguishing missile reflections from ground clutter reflections is to utilize ranging gates, whereby only objects at the range of the missile are detected. However, when the missile flies between hills at a lower altitude than the hilltops, either both the hills and the missile are sensed, or both are masked.

In DE—A—2821401 a radar clutter suppressor is disclosed in which targets may be distinguished from clutter by comparison of two or more video signals.

In DE—A—1804896 there is disclosed a radar system for reducing the intentional or unintentional interference from other transmitters by comparing a polarized return signal to a reference value derived from a previously received return signal. However, such a system is not useful for detecting objects having preferential polarization plane reflection characteristics.

A further radar system is disclosed in US—A—4005425 for detecting co-linear and cross-polarization return signals from a target. However, that patent does not suggest the comparison of such signals for detecting an object that preferentially reflects transmitted radiation in a distinct plane.

According to the present invention there is provided a method for detecting objects having preferential polarization plane reflection characteristics, comprising the steps of:

(a) transmitting from a given location, a first plane-polarized electromagnetic wave that is oriented in a predetermined reference plane;

(b) transmitting from the same given location as the first wave is transmitted, a second electromagnetic wave having the same frequency and intensity as the first wave and not being oriented in the predetermined reference plane;

(c) receiving at a given location, reflections of the first transmitted wave to provide a first received signal;

(d) receiving at the same given location as the reflections of the first wave are received, reflections of the second transmitted wave to provide a second received signal; and

(e) comparing the first received signal to the second received signal for detecting an object that preferentially reflects said transmitted electromagnetic waves in a distinct plane so as to distinguish such object from other objects not having such characteristics; characterized by

(f) periodically shifting the phase of the first electromagnetic wave to avoid consistent multipath wave cancellations and reinforcements; and

(g) periodically shifting the phase of the second electromagnetic wave to be in phase with the first electromagnetic wave to avoid consistent multipath wave cancellations and reinforcements.

The invention also includes a method for detecting objects having preferential polarization plane reflection characteristics, comprising the steps of:

(a) transmitting from a given location, a first plane-polarized electromagnetic wave that is oriented in a prdetermined reference plane;

(b) transmitting from the same given location as the first wave is transmitted, a second electromagnetic wave having the same frequency and intensity as the first wave and not being oriented in the predetermined reference plane;

(d) receiving at the same given location as the reflections of the first wave are received, reflections of the second transmitted wave to provide a second received signal; and

(e) comparing the first received signal to the second received signal for detecting an object that preferentially reflects said transmitted electromagnetic waves in a distinct plane so as to distinguish such object from other objects not having such characteristics, characterized by

(f) providing a carrier signal at the transmission frequency of the first and second electromagnetic waves for causing the waves to be transmitted at said frequency;

(g) providing a modulation signal at a modulation frequency that is lower than said transmission frequency;

(h) modulating the carrier signal in response to the modulation signal for causing the first and second electromagnetic waves to be modulated at said modulation frequency; and

(i) mixing the receiving signals with the carrier signal to provide the received signals at said modulation frequency.

According to further aspects of the invention there are provided systems for putting the methods of the invention into effect.

Human beings, because of their arms, legs and body outline, tend to reflect energy preferentially in one polarization plane or another. On the other hand, blowing rain, snow, and said waving grass and various small objects, such as birds, and rabbits, do not so reflect. Thus, polarization ratiometry provides the means to overcome the false alarm problems associated with traditional Doppler microwave systems that do sense these non-human elements found in most environments.

Although the present invention is useful for detecting stationary objects that reflect energy preferentially in one plane or another, the present invention is particularly applicable for detecting the movement of such objects. One such application is intrusion detection, specifically human movement into restricted areas. The movement of a human is readily detected in accordance with the present invention by detecting a change in the comparison of the signals derived from reflections of the transmitted waves having different planes of polarization.

The present invention also is useful for detecting missiles or aircraft flying at low altitudes because there is no change in the preferential polarization of electromagnetic waves reflected from the background Earth environment when such waves are transmitted from and reflected to a high altitude. Another application of the present invention is to reduce sea wave radar clutter. Sea waves generally move in a given direction and such would produce a given "offset" in polarization ratio magnitude. When a low flying aircraft or missile enters the radar beam, its polarization ratio is greatly different from that of the sea wave.

Additional features and advantages of the present invention are discussed in relation to the description of the preferred embodiments.

Brief description of the drawing

Figure 1 is a schematic block diagram of a preferred embodiment of the transmitter system of the present invention.

Figure 2 is a schematic block diagram of a preferred embodiment of the receiver system of the present invention for use in combination with the transmitter system of Figure 1.

Figure 3 is a perspective and partially schematic view of an antenna used in the transmitter and receiver systems of the present invention.

Figure 4 is a schematic circuit diagram of the antenna of Figure 3 in combination with a switching-circuit as shown in Figures 1 and 2, for switching the preferential polarization plane of such antenna.

Figures 5A, 5B, 5C and 5D illustrate the waveforms of signals that operate the QPSK phase shifter in the transmitter system of Figure 1.

Figure 6 schematically illustrates a bi-static array of polarization ratiometry detection systems.

Figure 7 schematically illustrates a mono-static array of polarization ratiometer detection systems.

Description of the preferred embodiments

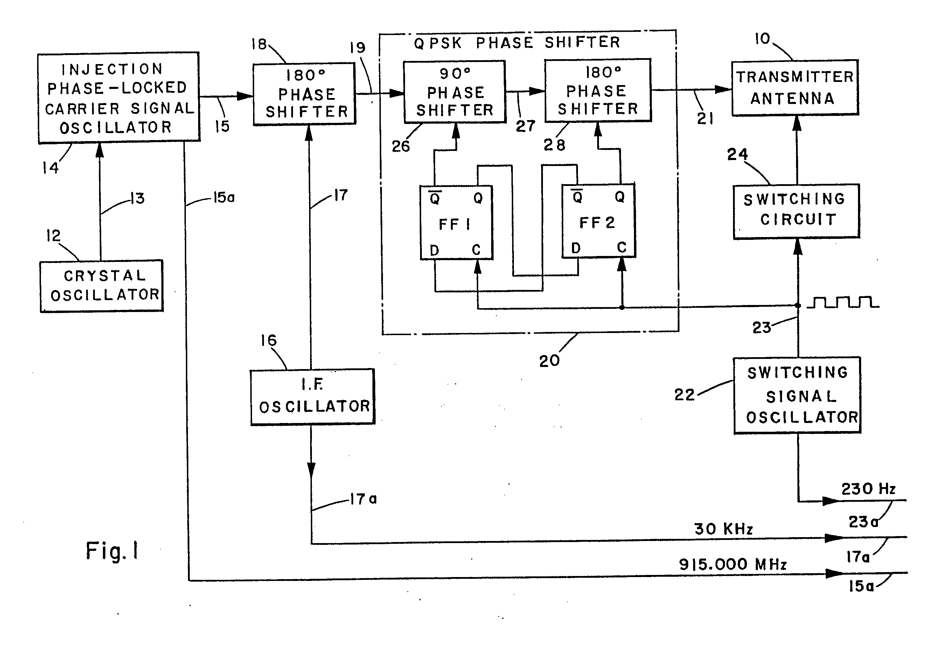

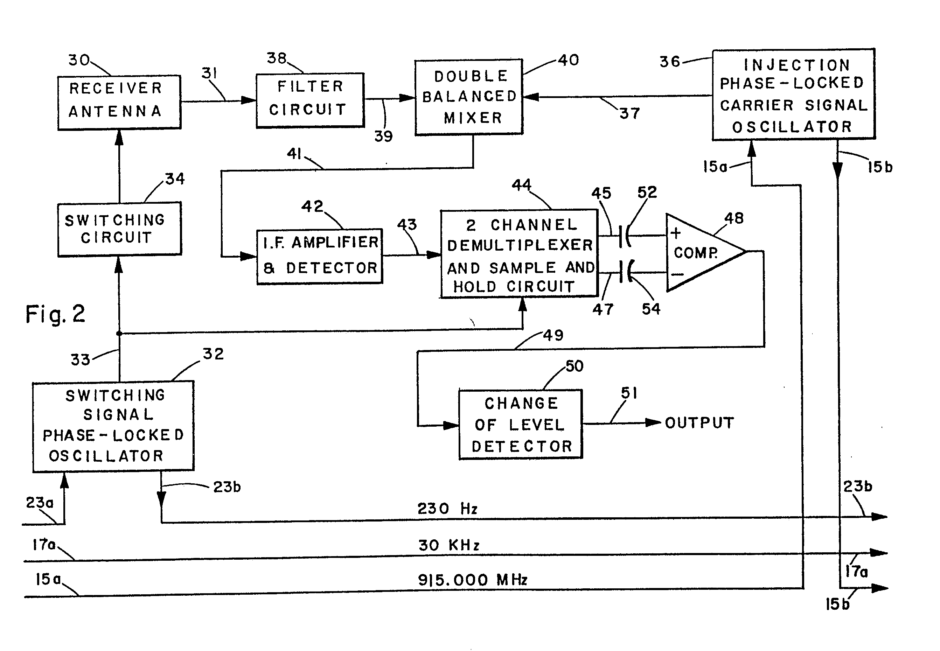

The preferred embodiment of the system of the present invention is useful for detecting the movement of objects having preferential polarization plane reflection characteristics. This embodiment includes a transmitter system illustrated in Figure 1 and a receiver system illustrated in Figure 2.

The transmitter system includes a transmitter antenna 10, a crystal oscillator 12, an injection phase-locked carrier signal oscillator 14, an IF oscillator 16, a 180 degree phase shifter 18, a QPSK phase shifter 20, a switching signal oscillator 22, and a switching circuit 24. The QPSK phase shifter 20 includes a pair of D flip-flops FF1 and FF2, a 90 degree phase shifter 26 and a 180 degree phase shifter 28.

The receiver system (Figure 2) includes a receiver antenna 30, a switching signal phase-locked oscillator 32, a switching circuit 34, an injection phase-locked carrier signal oscillator 36, a filter circuit 38, a double balanced mixer 40, an IF amplifier and detector 42, a two-channel demultiplexer and sample and hold circuit 44, a comparator 48 and a change of level detector 50.

The transmitter antenna 10 is adapted for transmitting electromagnetic energy waves. Such waves may be in a range of from approximately 100 KHZ radio waves up to and including light waves. In the preferred embodiment, the transmitted waves are radio frequency RF waves having a carrier frequency of 915.000 MHZ.

The crystal oscillator 12 generates a 915.000 MHZ signal, which is provided via the line 13 to the injection phase-locked carrier signal oscillator 14. The oscillator 14 provides a 915.000 MHZ carrier signal on the line 15, and further provides a 915.000 MHZ reference signal in phase therewith on the line 15a to the injection phase-locked carrier signal oscillator 36 of the receiver system (Figure 2). The oscillator 36 provides a 915.000 MHZ carrier signal on the line 37 that is in phase with the carrier signal on the line 15a, and further provides a 915.000 MHZ reference signal on the line 15b in phase therewith.

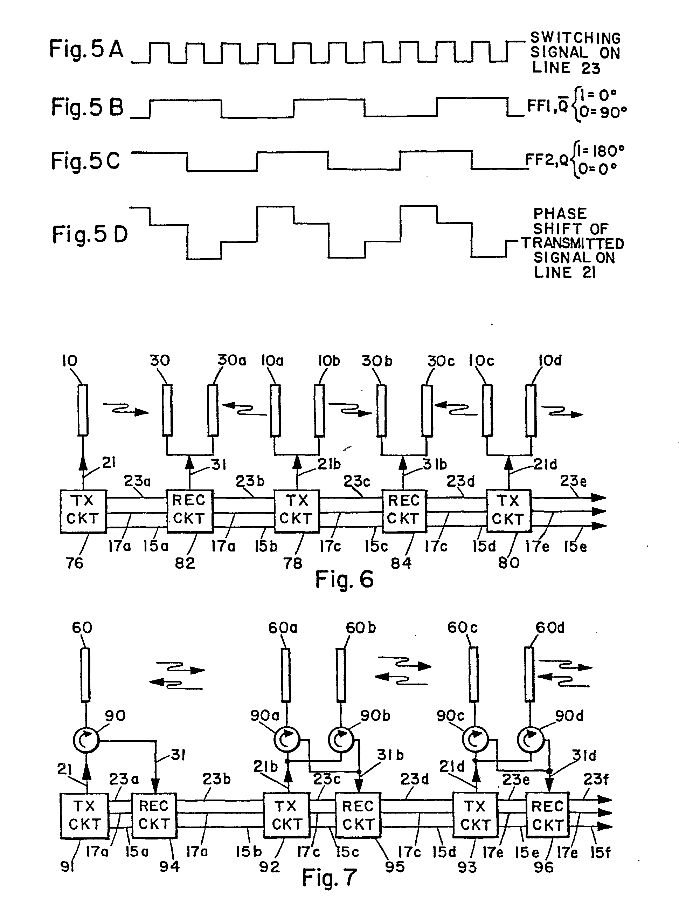

The IF oscillator generates a 30 KHZ modulation signal and provides the modulation signal to the 180 degree phase shifter 18 via the line 17. The IF oscillator also provides a 30 KHZ reference signal on the line 17a in phase with the modulation signal on the line 17. This 30 KHZ reference signal is used to synchronize the modulation of other transmitter systems used in combination with the transmitter system of Figure 1. Such combinations are described later with reference to Figures 6 and 7. The frequency of the modulation signal may be other than 30 KHZ, but it must be lower than the frequency of the carrier signal on line 15.

The 180 degree phase shifter 18 functions as a modulator and responds to the 30 KHZ modulation signal on the line 17 by modulating the carrier signal on line 15 by shifting the phase of the carrier signal by 180 degrees at a 30 KHZ rate. The modulated carrier signal is provided to the transmitter antenna 10 via the line 19, the QPSK phase shifter 20 and the line 21. As a result, the phase of the 915.000 MHZ wave transmitted by the transmitter antenna 10 is shifted 180 degrees at a 30 KHZ rate.

In the receiver system (Figure 2), the receiver antenna 30 is adapted for receiving reflections of the modulated waves transmitted by the transmitter antenna 10 and for providing a received signal on the line 31 in response thereto. The received signal on line 31 is passed through a filter circuit 38, which includes both an RF filter and a band pass filter; and a filtered received signal is thereby provided on the line 39.

An intermediate frequency signal is provided in response to the received signal on the line 39 by a super heterodyning technique. The double balanced mixer 40 mixes the received signal on the line 39 with the 915.000 MHZ carrier signal on the line 37 and thereby produces a received signal on the line 41 at the modulation frequency of 30 KHZ. The system of the present invention thus provides superheterodyne receiver operation without having to provide an additional local IF oscillator in the receiver system.

The received signal on the line 41 is passed through an IF amplifier and detector 42 to provide a detected received signal on the line 43.

Both the first and second electromagnetic waves are plane polarized, and both are transmitted by a single transmitter antenna 10. This is accomplished by alternatively switching the preferential polarization plane of the transmitter antenna 10 at a predetermined alternation rate. Likewise a single receiver antenna 30 is used in the receiver system to receive reflections of both the first and second electromagnetic waves transmitted antenna 10. The preferential polarization plane of the receiver antenna 10 is alternatively switched at the predetermined alternation rate in synchronization of the switching of the preferential polarization planes of the transmitter antenna 10.

It is assumed that the target object is sensed in the two planes fast enough so as to be viewed as stationary even though it may be a fast moving object, such as a missile. In the preferred embodiment, the polarization plane is switched at approximately 230 times per second in response to a switching signal provided on the line 23 from the switching signal oscillator 22. The oscillator provides the 230 HZ switching signal on the line 23 and further provides a 230 HZ reference signal in phase therewith via the line 23a to the switching signal phase-locked oscillator 32 in the receiver system. The oscillator 32 provides a 230 HZ switching signal on the line 33 in phase with the switching signal on the line 23 from the switching circuit oscillator 22 in the transmitter system, and further provides a 230 HZ reference signal on the line 23b in phase therewith.

The switching circuit 24 is coupled to the transmitter antenna 10 and is adapted for alternatively switching the preferential polarization plane of the transmitter antenna 10, in response to the switching signal on the line 23 to cause the transmitter antenna 10 to alternatively transmit the first and second waves at the 230 HZ alternation rate of the switching signal on the line 23.

The switching circuit 34 is coupled to the receiver antenna 30 and is adapted for alternatively switching the preferential polarization plane of the receiver antenna 30 in response to the switching signal on the line 33 at the 230 HZ alternation rate to cause the preferential polarization plane of the receiver antenna 30 to alternatively coincide with the respective polarization planes of the waves transmitted by the transmitter antenna 10.

The 2-channel demultiplexer and sample and hold circuit 44 demultiplexes the detected signal on the line 43 to separate the first received signal from the second received signal in response to the switching signal on line 33 at the 230 HZ alternation rate to thereby enable comparison of the first and second received signals. The first separated signal is sampled and held on the line 45 until the second received signal is sampled by the circuit 44 and provided on the line 47 so that the first and second received signals are provided simultaneously for purposes of comparison. Coupling capacitors 52 and 54 are provided respectively in the lines 45 and 47 between the demultiplexer circuit 44 and the comparator circuit 48 to eliminate offset signals due to strong stationary reflectors, such as vehicles or fences.

The comparator 48 provides a signal on the line 49 that is responsive to the comparison of the respective first and second received signals on the lines 45 and 47. The signal on the line 49 remains at zero until an object having a preferential polarization plane moves into the view of the receiver antenna. The resulting change in the level of the signal on the line 49 that occurs in response to such movement is detected by the change of level detector 50, which responds by providing an alarm signal on its output line 51.

Were it not for the coupling capacitors 52 and 54, the comparator would provide a signal offset from zero on the line 49 whenever electromagnetic wave reflections were received by the receiver antenna 30 from stationary objects having preferential polarization plane reflection characteristics.

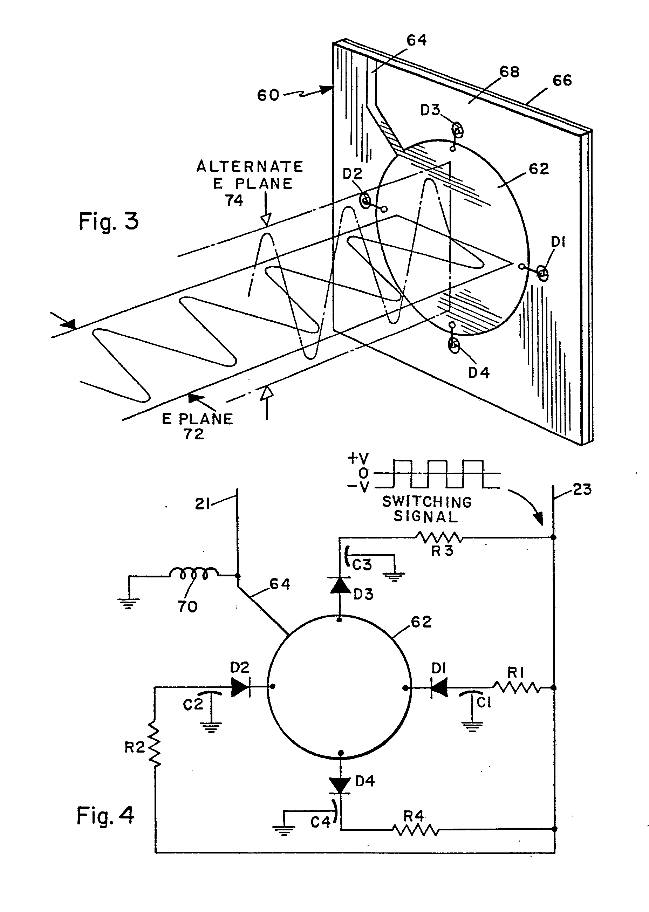

The preferred embodiment of the transmitter of the transmitter antenna 10 and the switching circuit 24 is illustrated in Figures 3 and 4. The transmitter antenna 10 is a microstrip antenna 60 having a circular conductive radiator element 62 and an RF feed element 64, a conductive ground plane element 66, and a layer of dielectric material 68 separating the ground plane element 66 from the radiator element 62 and the RF feed element 64. The modulated carrier signal on the line 21 is applied to the RF feed element 64.

The switching circuit 24 includes a coil 70 for providing a DC ground connection to the RF feed element 64, a first pair of PIN diodes D1 and D2 and a second pair of PIN diodes D3 and D4. The PIN diodes D1 and D2 have their respective cathodes connected to a first pair of diametrically opposed points on the periphery of the circular radiator element 62 and their respective anodes coupled by current limiting resistors R1 and R2 and RF by-pass capacitors C1 and C2 to the switching signal line 23 from the switching signal oscillator 22.

The PIN diodes D3 and D4 have their respective anodes connected to a second pair of diametrically opposed points on the periphery of the circular radiator element 62 and their respective cathodes coupled by current limiting resistors R3 and R4 and RF by-pass capacitors C3 and C4 to the switching signal line 23.

The switching signal on the line 23, as shown in Figure 4, is a square wave alternating between a positive voltage, +V with respect to DC ground, and a negative voltage, −V with respect to DC ground. When the switching signal is at +V the first pair of PIN diodes D1 and D2 are forward biased and the second pair of PIN diodes D3 and D4 are reverse biased. When the switching signal is at −V, the second pair of PIN diodes D3 and D4 are forward biased and the first pair of PIN diodes D1 and D2 are reverse biased.

The first pair of PIN diodes D1 and D2 responds to the switching signal on line 23 by alternatively biasing the first pair of diametrically opposed points on the periphery of the circular radiator element 62 to alternatively connect the first pair of points to DC ground when reverse biased.

The second pair of PIN diodes D3 and D4 responds to the switching signal on the line 23 by alternatively biasing the second pair of diametrically opposed points on the periphery of the circular radiator element 62 to alternatively create an open circuit between the second pair of points and DC ground when an open circuit is created between the first pair of points and DC ground, or connect the second pair of points to DC ground when an open circuit is created between the first pair of points and DC ground.

A preferential polarization plane is provided between whichever pair of points on the periphery of the circular radiator element 62 that is open-circuited to DC ground. Thus an E plane of preferential polarization 72 is created between the pair of points connected to the pair of PIN diodes D1 and D2 when the PIN diodes D1 and D2 are reverse biased in response to the switching signal on line 23 being at −V volts; and an alternate E place of preferential polarization 74 is created between the pair of points connected to the pair of PIN diodes D3 and D4 when the PIN diodes D3 and D4 are reverse biased in response to the switching signal on the line 23 being at +V volts.

Accordingly, the transmitter antenna 10 is switched to alternatively transmit electromagnetic radiation waves in either the E plane 72 or the alternate E plane 74 at an alternation rate of 230 HZ.

The receiver antenna 30 and the switching circuit 34 are constructed in the same manner as the transmitter antenna 10 and the switching circuit 24 described above with reference to Figures 3 and 4. In the receiver system, the RF feed line 64 is connected to the output line 31 to the filter circuit 38; and the switch signal line 23 of the switching circuit shown in Figure 4 is the same as the switching signal line 33 from the switching signal oscillator 32.

The operation of the QPSK (quada-phase-shift-keying) phase shifter 20 in the transmitter system is described with reference to Figures 5A through 5D. The QPSK phase shifter 20 periodically shifts the phase of the carrier signal on the line 19 in order to avoid consistent multipath wave cancellations and reinforcements, such as occur when reflected radiation travels along multiple paths of unequal length to the receiver antenna 30. Signal cancellation often occurs due to multiple reflections from environmental objects, especially when the radiation is transmitted along an axis that is relatively parallel to the Earth's surface.

The flip-flops FF1 and FF2 of the QPSK phase shifter 20 are clocked by the switching signal on the line 23. Referring to Figure 5A, it is seen that the switching signal is a square wave that alternates between a logic "1" and a logic "0".

The Q output of the flip-flop FF1 is connected to the D input of the flip-flop FF2; and the $\overline{Q}$ output of the flip-flop FF2 is connected to the D input of the flip-flop FF1.

The 90 degree phase shifter 26 responds to the signal appearing at the $\overline{Q}$ output of the flip-flop FF1 in accordance with the relationship shown in Figure 5B. When the $\overline{Q}$ output of the flip-flop FF1 is at logic "1", the phase shift in the carrier signal on the line 19 provided on the line 27 by the 90 degree phase shifter 26 is zero degrees; and when the $\overline{Q}$ output of the flip-flop FF1 is at logic "0" the phase shift in the carrier signal on the line 19 provided on the line 27 by the 90 degree phase shifter 26 is 90 degrees.

The 180 degree phase shifter 28 responds to the signal appearing at the Q output of the flip-flop FF2 in accordance with the relationship shown in Figure 5C. When the Q output of the flip-flop FF2 is at logic "1", the phase shift in the signal on the line 27 provided on the line 21 by the 180 degree phase shifter is zero degrees; and when the Q output of the flip-flop FF2 is at logic "0", the phase shift in the signal on the line 27 provided on the line 21 by the 180 degree phase shifter is 180 degrees.

The Figure 5D shows the cumulative phase shift in the transmitted RF carrier signal on line 21 provided by the 90 degree phase shifter 26 and the 180 degree phase shifter 28 upon the RF carrier signal on the line 19. It is seen that the phase is shifted periodically in alternative increments of 90 degrees and 180 degrees. Even if phase cancellation should occur at any given phase, it is unlikely that it will occur at the other three phases. The alternate phase shift increments of 180 degrees are provided, becuse cancellation conditions resulting in signal nulls are more readily overcome by switching the phase a full 180 degrees.

Referring to Figures 5A and 5D, it is observed that the switching signal occurs in both states during any given degree of phase shift. Thus the transmitter antenna 10 and the receiver antenna 30 are switched to operate in both of their preferential polarization planes during any given degree of phase shift so that the first and second received signals compared by the comparator 48 are derived from first and second electromagnetic waves that are transmitted with the same degree of phase shift.

Arrays of transmitting antenna 10 and receiving antennas 30 may be used to provide surveillance against intrusion of a large area. The array is said to be in a bi-static mode when the transmitter antennas 10 and the receiver antennas 30 are developed at separate locations. The array is in mono-static mode when transmitter antennas 10 are respectively deployed at the same locations as the receiver antennas 30.

A bi-static array is shown in Figure 6. It includes a plurality of transmitter antennas 10, 10a, 10b, 10c, 10d, . . ., and a plurality of receiver antennas 30, 30a, 30b, 30c, . . .. The transmitter antenna 10 is connected to a transmitter circuit 76, such as shown in Figure 1. The transmitter antennas 10a and 10b are connected to a transmitter circuit 78 and the transmitter antennas 10c and 10d are connected to a transmitter circuit 80. The receiver antennas 30 and 30a are connected to the receiver circuit 82. Additional transmitter antennas and circuits and receiver antennas and circuits in this array are not shown. The receiver antenna 30 is positioned for receiving reflections of waves transmitted by the transmitter antenna 10a; the receiver antenna 30b is positioned for receiving reflections of waves transmitted by the transmitter 10b; etc.

Each of the receiver circuits 82 and 84 is the same as the receiver circuits shown in Figure 2, except for being adapted for receiving signals from two different antennas.

The transmitter circuits 78 and 80 are the same as the transmitter circuit shown in Figure 1 with the following exceptions. The IF oscillator 16 is replaced in the transmitter circuits 78 and 80 with a phase locked oscillator that responds to the 30 KHZ reference signal provided on the line 17a or 17c respectively and provides both a 30 KHZ modulation signal to the corresponding 180 degree modulation phase shifter in the transmitter circuit and a 30 KHZ reference signal on the line 17c from the transmitter circuit 78 and on the line 17e from the transmitter circuit 80, respectively. All of the 30 KHZ modulation signals provided in the different transmitter circuits 76, 78, 80 and all of the 30 KHZ reference signals provided on the lines 17a, 17c, 17e are in phase with each other. Another exception is that the switching signal oscillator 22 is replaced in the transmitter circuits 78 and 80 with a switching signal phase-locked oscillator, such as the switching signal phase-locked oscillator 32 in the receiver system shown in Figure 2. Each such switching signal oscillator not only provides a 230 HZ switching signal to its corresponding switching circuit, such as the switching circuit 24, but further provides a 230 HZ reference signal in phase therewith on the respective lines 23c and 23e. All of the 230 HZ switching signals provided in the transmitter circuits 76, 78, 80 and in the receiver circuits 82, 84 and all of the 230 HZ reference signals on the lines 23a, 23b, 23c, 23d, 23e are in phase with each other. As a result all of the waves transmitted by the transmitter antennas 10, 10a, 10b, 10c, 10d, . . . . in response to the carrier signals provided on lines 21, 21b, 21d from the respective transmitter circuits 76, 78, 80 and all of the received signals produced in the receiver circuits 82, 84 from the lines 31, 31b in response to receipt by the receiver antennas 30, 30a, 30b, 30c of reflections of such transmitted waves are in phase with each other. Thus there is no interference between the waves transmitted by the different antennas 10, 10a, 10b, 10c, 10d, whereas in Doppler systems, different antennas in a close array must transmit at different frequencies to avoid interfering with each other.

A preferred embodiment of a bi-static array is shown in Figure 7. In includes a plurality of antennas 60, 60a, 60b, 60c, 60d,. . . that are used for both transmitting and receiving. Each such antenna is coupled through a respective circulator 90, 90a, 90b, 90c, 90d, . . . . to a transmitter circuit 91, 92, 93 and a receiver circuit 94, 95, 96 as shown in Figure 7. Additional antennas, transmitter circuits and receiver circuits in this array are not shown.

Antennas 60 and 60a are positioned for receiving reflections of waves transmitted by each other; antennas 60b and 60c are positioned for receiving reflections of waves transmitted by each other; etc.

The receiver circuits 94, 95, 96 are the same as the receiver circuit shown in Figure 2, except for being adapted for receiving signals from two different antennas.

The transmitter circuit 91 is the same as the transmitter circuit shown in Figure 1, since it is the first transmitter circuit in a series of transmitter and receiver circuits. The transmitter circuits 92, 93 are the same as the transmitter circuits 78, 80 described above with reference to Figure 6. In-phase reference signals are provided on the respective lines 15a, 15b, 15c, 15d, 15e, 15f; 17a, 17c, 17e; and 23a, 23b, 23c, 23d, 23e, 23f between the respective transmitter circuits 91, 92, 93 and receiver circuits 94, 95, 96 in the same manner as described above in relation to the bi-static embodiment shown in Figure 6.

All of the waves transmitted by the antennas 60, 60a, 60b, 60c, 60d, . . . . in response to the carrier signals provided on the lines 21, 21b, 21d from the respective transmitter circuits 91, 92, 93 and all of the received signals produced in the receiver circuits 94, 95, 96 from the lines 31, 31b, 31d in response to receipt by the antennas 60, 60a, 60b, 60c, 60d of reflections of such transmitted waves are in phase with each other.

The bi-static embodiment is preferred in a perimeter application, such as along a fence; whereas the monostatic embodiment is preferred for critical area applications, such as warehouses. A multiple polarization plane capability may also be accomplished with two or more antennas continually sensing the target. However, if the target is close in range relative to the distance between the antennas (as is the case in human motion detection) an ambiguity arises. Because of the distance between the antennas, a different "view" of the target and background are obtained from each antenna causing an error in ratio. For this reason, the switched plane antenna described above, which has a phase center exactly at the same point for both planes is preferred.

Also the present invention is operable even if only one of the transmitted electromagnetic waves is plane polarized. The other transmitted wave may be circular polarized, for example. It is preferred, however, that all of the transmitted waves be plane polarized so as to enhance the chances of detecting objects having a preferential polarization plane characteristic nowithstanding the objects particular orientation in relation to the polarization plane of the transmitted waves.

**Claims**

1. A method for detecting objects having preferential polarization plane reflection characteristics, comprising the steps of:

(a) transmitting from a given location, a first plane-polarized electromagnetic wave that is oriented in a predetermined reference plane;

(b) transmitting from the same given location as the first wave is transmitted, a second electromagnetic wave having the same frequency and intensity as the first wave and not being oriented in the predetermined reference plane;

(c) receiving at a given location, reflections of the first transmitted wave to provide a first received signal;

(d) receiving at the same given location as the reflections of the first wave are received, reflections of the second transmitted wave to provide a second received signal; and

(e) comparing the first received signal to the second received signal for detecting an object that preferentially reflects said transmitted electromagnetic waves in a distinct plane so as to distinguish such object from other objects not having such characteristics; characterized by

(f) periodically shifting the phase of the first electromagnetic wave to avoid consistent multipath wave cancellations and reinforcements; and

(g) periodically shifting the phase of the second electromagnetic wave to be in phase with the first electromagnetic wave to avoid consistent multipath wave cancellations and reinforcements.

2. A method according to claim 1, wherein said phase is shifted periodically in alternative increments of 90 degrees and 180 degrees.

3. A method for detecting objects having preferential polarization plane reflection characteristics, comprising the steps of:

(a) transmitting from a given location, a first plane-polarized electromagnetic wave that is oriented in a pre-determined reference plane;

(b) transmitting from the same given location as the first wave is transmitted, a second electromagnetic wave having the same frequency and intensity as the first wave and not being oriented in the predetermined reference plane;

(c) receiving at a given location, reflections of the first transmitted wave to provide a first received signal;

(d) receiving at the same given location as the reflections of the first wave are received, reflections of the second transmitted wave to provide a second received signal; and

(e) comparing the first received signal to the second received signal for detecting an object that preferentially reflects said transmitted electromagnetic waves in a distinct plane so as to distinguish such object from other objects not having such characteristics, characterized by:

(f) providing a carrier signal at the transmission frequency of the first and second electromagnetic waves for causing the waves to be transmitted at said frequency;

(g) providing a modulation signal at a modulation frequency that is lower than said transmission frequency;

(h) modulating the carrier signal in response to the modulation signal for causing the first and second elctromagnetic waves to be phase modulated at said modulation frequency; and (i) mixing the received signals with the carrier signal to provide the received signals at said modulation frequency.

4. A method according to claim 3 wherein step (h) comprises the steps of:

(a) shifting the phase of the carrier signal by 180 degrees at the frequency of the modulation signal.

5. A system for detecting objects having preferential polarization plane reflection characteristics, comprising

transmitter means (10) for transmitting from a given location, a first plane-polarized electromagnetic wave that is oriented in a predetermined reference plane, and a second electromagnetic wave having the same frequency and intensity as the first wave and not being oriented in the predetermined reference plane;

receiver means (30) for receiving at a given location, reflections of the first transmitted wave to provide a first received signal, and reflections of the second transmitted wave to provide a second received signal; and

comparator means (48) for comparing the first received signal to the second received signal for detecting an object that preferentially reflects said transmitted electromagnetic waves in a distinct plane so as to distinguish such object from other objects not having such characteristics; characterized by:

phase-shifter means (20) for periodically shifting the phase of the first electromagnetic wave and for periodically shifting the phase of the second electromagnetic wave to be in phase with the first electromagnetic wave to avoid consistent multipath wave cancellations and reinforcements.

6. A system according to claim 5, wherein the phase-shifter means (20) are adapted for shifting said phase periodically in alternative increments of 90 degrees and 180 degrees.

7. A system for detecting objects having preferential polarization plane reflection characteristics, comprising
transmitter means (10) for transmitting from a given location, a first plane-polarized electromagnetic wave that is oriented in a predetermined reference plane, and a second electromagnetic wave having the same frequency and intensity as the first wave and not being oriented in the predetermined reference plane;

receiver means (30) for receiving at a given lcoation, reflections of the first transmitted wave to provide a first received signal, and reflections of the second transmitted wave to provide a second received signal; and

comparator means (48) for comparing the first received signal to the second received signal for detecting an object that preferentially reflects said transmitted electromagnetic waves in a distinct plane so as to distinguish such object from other objects not having such characteristics; characterized by

first circuit means (14, 15) for providing a carrier signal at the transmission frequency of the first and second electromagnetic waves for causing the waves to be transmitted at said frequency;

second circuit means (16, 17) for providing a modulation signal at a modulation frequency that is lower than said transmission frequency;

modulator means (18) for modulating the carrier signal in response to the modulation signal for causing the first and second electromagnetic waves to be phase modulated at said modulation frequency; and

mixer means (40) for mixing the received signals with the carrier signal to provide the received signals at said modulation frequency.

8. A system according to claim 7 wherein the modulator means (18) comprises:
phase-shifter means responsive to the modulation signal for shifting the phase of the carrier signal by 180 degrees at the frequency of the modulation signal.

**Patentansprüche**

1. Verfahren zur Entdeckung von Gegenständen mit Reflektions-eigenschaften in einer bevorzugten Polarisationsebene, das folgende Verfahrensschritte umfaßt:

(a) von einer vorgegebenen Stelle wird eine erste linear polarisierte elektromagnetische Welle erzeugt, die in eine bevorzugte Bezugsebene gerichtet ist;

(b) von der gleichen vorgegebenen Stelle bezüglich der ersten Welle wird eine zweite elektromagnetische Welle erzeugt, welche die gleiche Frequenz und Intensität wie die erste Welle hat und welche nicht in die vorbestimmte Bezugsebene gerichtet ist;

(c) an einer vorbestimmten Stelle werden Reflektions der ersten ausgestrahlten Welle empfangen, um eine erstes Empfangssignal zu liefern;

(d) an der gleichen vorbestimmten Stelle, an welcher die Reflektionen der ersten Welle empfangen werden, werden Reflektionen der zweiten ausgestrahlten Welle empfangen, um ein zweites Empfangssignal zu liefern; und

(e) das erste Empfangssignal wird mit dem zweiten Empfangssignal verglichen, um ein Objekt zu erfassen, das die abgestrahlten elektromagnetischen Wellen in einer bestimmten Ebene bevorzugt reflektiert, so daß dieser Gegenstand von anderen Gegenständen unterschieden wird, die nicht diese Eingenschaften haben, dadurch gekennzeichnet, daß

(f) die Phase der erseten elektromagnetischen Welle periodisch verändert wird, um Aufhebungen oder Verstärkungen infolge von miteinander übereinstimmenden, auf mehreren Wegen übertragenen Welle zu vermeiden; und

(g) die Phase der zweiten elektromagnetischen Welle periodisch geändert bzw. verschoben wird, um in Phase mit der ersten elektromagnetischen Welle zu sein, um Aufhebungen oder Verstärkungen infolge von übereinstimmenden, auf mehreren Wegen übertragenen Wellen zu vermeiden.

2. Verfahren nach Anspruch 1, dadurch gekennzeichnet, daß die Phase periodisch wechselweise um Beträge von 90° und 180° verschoben wird.

3. Verfahren zur Entdeckung von Gegenständen mit Reflektions-eigenschaften in einer bevorzugten Polarisationsebene, das folgende Verfahrensschritte umfaßt:

(a) von einer vorgegeben Stelle wird eine erste linear polarisierte elektromagnetische Welle erzeugt, die in eine bevorzugte Bezugsebene gerichtet ist;

(b) von der gleichen vorgegebenen Stelle bezüglich der ersten Welle wird eine zweite elektromagnetische Welle erzeugt, welche die gleiche Frequenz und Intensität wie die erste Welle und welche nicht in die vorbestimmte Bezugsebene gerichtet ist;

(c) an einer vorbestimmten Stelle werden Reflektionen der ersten ausgestrahlten Welle empfangen, um ein erstes Empfangssignal zu liefern;

(d) an der gleichen vorbestimmten Stelle, an welcher die Reflektionen der ersten Welle empfangen werden, werden Reflektionen der zweiten ausgestrahlten Welle empfangen, um ein zweites Empfangssignal zu liefern; und

(e) das erste Empfangssignal wird mit dem zweiten Empfangssignal verglichen, um ein Objekt zu erfassen, das die abgestrahlten elektromagnetischen Wellen in einer bestimmten Ebene bevorzugt reflektiert, so daß dieser Gegenstand von anderen Gegenständen unterschieden wird, die nicht diese Eigenschaften haben, dadurch gekennzeichnet, daß

(f) ein Trägersignal mit der Übertragungsfrequenz der ersten und zweiten elektromagnetischen Wellen zur Übertragung der Wellen mit dieser Frequenz erzeugt wird;

(g) daß ein Modulationssignal bei einer Modulationsfrequenz erzeugt wird, die niedriger ist als die Übertragungsfrequenz;

(h) daß das Trägersignal abhängig vom Modulationssignal moduliert wird, um die ersten und zweiten elektromagnetischen Wellen bei der Modulationsfrequenz in der Phase zu modulieren; und

(i) daß die empfangenen Signale mit dem Trägersignal gemischt werden, um die empfangenen Signale bei der Modulationsfrequenz zu erhalten.

4. Verfahren nach Anspruch 3, bei dem der Schritte (h) folgenden Schritt umfaßt:

(a) die Phase des Trägersignals wird bei der Frequenz des Modulationssignals um 180° verschoben.

5. Einrichtung zur Erfassung von Gegenständen mit Reflektions-eigenschaften in einer bevorzugten Polarisationsebene, mit einem Sender (10) zur Erzeugung einer ersten linear polarisierten elektromagnetischen Welle, die in eine vorbestimmte Bezugsebene gerichtet ist, und einer zweiten elektromagnetischen Welle mit der gleichen Frequenz und Intensität wie die erste Welle, wobei die zweite Welle nicht in die vorbestimmte Bezugsebene gerichtet ist, und wobei die beiden Wellen von einer vorgegebenen gleichen Lage aus erzeugt werden;

mit einem Empfänger (30), der an einer vorbestimmten Stelle Reflektionen der ersten ausgestrahlten Welle zur Lieferung eines ersten Empfangssignals und Reflektionen der zweiten ausgestrahlten Welle zur Lieferung eines zweiten Empfangssignals empfängt;

mit einem Komparator (48) zum Vergleich der ersten Empfangssignals mit dem zweiten Empfangssignal zur Feststellung eines Gegenstandes, der die ausgestandten elektromagnetischen Wellen in einer bestimmten Ebene und zur Unterscheidung dieses Gegenstandes von anderen Gegenständen, welche nicht diese Eigenschaften haben, dadurch gekennzeichnet, daß

eine Phasenschieber (20) zum periodischen Verändern bzw. Verschieben der Phase der ersten elektromagnetischen Welle und zum periodischen Verändern der Phase der zweiten elektromagnetischen Welle in Phasengleichheit zur ersten elektromagnetischen Welle vorgesehen ist, um Aufhebungen und Verstärkungen infolge von übereinstimmenden, auf mehreren Wegen übertragenen Wellen zu vermeiden.

6. Einrichtung nach Anspruch 5, dadurch gekennzeichnet, daß der Phasenschieber (20) derart ausgelegt ist, daß er die Phase periodisch mit wechselnden Beträgen um 90° und 180° verändert.

7. Einrichtung zur Erfassung von Gegenständen mit Reflektions-eigenschaften in einer bevorzugten Polarisationsebene, mit einem Sender (10) zur Erzeugung einer ersten linear polarisierten elektromagnetischen Welle, die in eine vorbestimmte Bezugsebene gerichtet ist, und einer zweiten elektromagnetischen Welle mit der gleichen Frequenz und Intensität wie die erste Welle, wobei die zweite Welle nicht in die vorbestimmte Bezugsebene gerichtet ist, und wobei die beiden Wellen von einer vorgegebenen gleichen Lage aus erzeugt werden;

mit einem Empfänger (30), der an einer vorbestimmten Stelle Reflektionen der ersten ausgestrahlten Welle zur Lieferung eines ersten Empfangssignals und Reflektionen der zweiten ausgetrahlten Welle zur Lieferung eines zweiten Empfangssignals empfängt;

mit einem Komparator (48) zum Vergleich des ersten Empfangssignals mit dem zweiten Empfangssignal zur Feststellung eines Gegenstandes, der die ausgesandten elektromagnetischen Wellen in einer bestimmten Ebene und zur Unterscheidung dieses Gegenstandes von anderen Gegenständen, welche nicht diese Eigenschaften haben, dadurch gekennzeichnet, daß

eine erste Schaltungseinheit (14, 15) zur Erzeugung eines Trägersignals bei der Übertragungsfrequenz der ersten und zweiten elektromagnetischen Welle zur Übertragung der Wellen bei dieser Frequenz vorgesehen ist,

daß eine zweite Schaltungseinheit (16, 17) zur Lieferung eines Modulationssignals bei der Modulationsfrequenz vorgesehen ist, die niedriger als die Übertragungsfrequenz ist,

daß ein Modulator (18) zur Modulation des Trägersignals abhängig von dem Modulationssignal angeordnet ist, um die erste und zweite elektromagnetische Welle bezüglich ihrer Phase bei der Modulationsfrequenz zu modulieren, und

daß ein Mischer (40) zum Mischen der empfangenen Signale mit dem Trägersignal vorgesehen ist, um die empfangenen Signale auf der Modulationsfrequenz zu liefern.

8. Einrichtung nach Anspruch 7, wobei der Modulator (18) einen Phasenschieber enthält, der abhängig vom Modulationssignal die Phase des Trägersignals um 180° bei der Frequenz des Modulationssignals verschiebt.

**Revendications**

1. Procédé pour la détection d'objets présentant des caractéristiques de polarisation préférentielle en réflexion plane comprenant les phases suivantes:

a) transmission à partir d'un endroit donné d'une onde électromagnétique polarisée plane orientée dans un plan de référence prédéterminé;

b) transmission à partir du même endroit et au moment de la transmission de la première onde, d'une seconde onde de même fréquence et même intensité que la première non orientée dans le plan de référence prédéterminé;

c) réception à un endroit donné des réflexions de la première onde transmise pour produire un premier signal de réception;

d) réception au même endroit donné au moment de la réception des réflexions d'une première onde, des réflexions d'une seconde onde transmise pour produire un second signal de réception;

c) comparaison du premier signal de réception avec le second signal de réception pour détecter un objet qui réfléchit de façon préférentielle lesdites ondes électromagnétiques transmises dans un plan distinct de façon à distinguer cet objet d'autres objets qui ne possèdent pas ces caractéristiques; caractérisé en ce que l'on procède par;

f) déphasage périodique de la première onde électromagnétique de faccon à éviter les annulations et amplifications résultant des différences concordantes de chemins optiques;

g) déphasage périodique de la seconde onde électromagnétique pour la mettre en phase avec la première onde de manière à éviter les annulations et amplifications résultant des différences concordantes de chemins optiques;

2. Procédé selon la revendication 1 caractérisé en ce que le déphasage périodique est effectué par intervalles de 90° ou 180° d'angle.

3. Procédé pour la détection d'objets présentant des caractéristiques de polarisation préférentielle en réflexion plane comprenant les phases suivantes:

a) transmission à partir d'un endroit donné d'une première onde électromagnétique polarisée plane orientée dans un plane de référence déterminé;

b) transmission à partir du même endroit donné et au moment de la transmission de la première onde, d'une seconde onde de même fréquence et même intensité que la première non orientée dans le plan de référence prédeterminé;

c) réception à un endroit donné des réflexions de la première onde transmise pour produire un premier signal de réception;

d) réception au même endroit donné, au moment de la réception des réflexions de la première onde, des réflexions d'une seconde onde transmise pour produire un second signal de réception;

e) comparaison du premier signal reçu au second signal de réception pour détecter un objet qui réfléchit de façon préférentielle lesdites ondes électromagnétiques transmises dans un plan distinct de façon à distinguer cet objet d'autres objets ne possédant pas ces caractéristiques, caractérisé en ce que l'on;

f) génère un signal porteur de la fréquence de transmission des première et seconde ondes électromagnétiques pour la transmission des ondes à ladite fréquence;

g) génère un signal de modulation à une fréquence de modulation inférieure à ladite fréquence de transmission;

h) module le signal porteur avec le signal de modulation pour moduler en phase les première et seconde ondes électromagnétiques à cette fréquence de modulation et en ce que l'on

i) mélange les signaux reçus avec le signal porteur pour produire les signaux reçus à cette fréquence de modulation.

4. Procédé selon la revendication 3 caractérisé en ce que l'étape de modulation du signal porteur pour moduler en phase les première et seconde ondes comprend le déphasage de la porteuse par amplitude de 180° à la fréquence du signal de modulation.

5. Ensemble pour la détection d'objets présentant des caractéristiques de polarisation préférentielle en réflexion plane comprenant:

des moyens de transmission (10) pour transmettre à partir d'un endroit donné une première onde électromagnétique plane orientée dans un plan de référence prédéterminé et une seconde onde électromagnétique de même fréquence et même intensité que la première onde, mais non orientée dans le plan de référence,

des moyens de réception (30) pour recevoir à un endroit donné les réflexions de la première onde transmise afin de produire un premier signal de réception et recevoir les réflexions de la seconde onde transmise pour produire un second signal de réception,

des moyens de comparaison (48) pour comparer le premier signal de réception au second signal de réception afin de détecter un objet qui réfléchit préférentiellement ces ondes électromagnétiques transmises dans un plan distinct de façon à distinguer un tel objet d'autres objets ne présentant pas de telles caractéristiques, caractérisés par:

des moyens de déphasage (20) pour déphaser périodiquement la première onde électromagnétique et déphaser périodiquement la deuxième onde électromagnétique afin de la mettre en phase avec la première onde électromagnétique en vue d'éviter les annulations et amplifications résultant des différences de chemins optiques.

6. Ensemble selon la revendication 5, caractérisé en ce que les moyens de déphasage (20) sont prévus pour déphaser périodiquement selon Ides intervalles de 90° et 180° d'angle.

7. Ensemble pour la détection d'objets présentant des caractéristiques de polarisation préférentielle en réflexion plane, comprenant:

des moyens de transmission (10) pour transmettre à partir d'un endroit donné une première onde électromagnétique plane orientée dans un plan de référence prédéterminé et une second onde électromagnétique de même fréquence et même intensité que la première onde, mais non orientée dans le plan de référence,

des moyens de réception (30) pour recevoir à un endroit donné les réflexions de la première onde transmise, afin de produire un premier signal de réception et recevoir les réflexions de la second onde transmise pour produire un second signal de réception,

des moyens de comparaison (48) pour comparer le premier signal de réception au second signal de réception afin de détecter un objet qui réfléchit préférentiellement ces ondes électromagnétiques transmises dans un plan distinct de façon à distinguer un tel objet d'autres objets ne présentant pas de telles caractéristiques, caractérisé par:

un premier circuit (14, 15) produisant un signal porteur de même fréquence que les première et seconde ondes électromagnétiques pour permettre la transmission des ondes à ladite fréquence;

un second circuit (16, 17) produisant un signal de modulation à la fréquence de modulation inférieure à ladite fréquence de transmission;

un modulateur (18) pour moduler le signal porteur avec la fréquence du signal de modulation afin de moduler en phase les première et seconde ondes électromagnétiques à la fréquence de modulation et,

un mélangeur (40) pour mélanger les signaux reçus avec le signal porteur et produire les signaux de réception à ladite fréquence de modulation.

8. Ensemble selon la revendication 7 caractérisé en ce que le modulateur (8) comprend un déphaseur correspondant au signal de modulation pour le déphasage du signal porteur de 180° à la fréquence du signal de modulation.

Fig. I

0 042 203

Fig. 2

0 042 203

Fig. 3

ALTERNATE
E PLANE
74

E PLANE
72

+V
0
-V

SWITCHING
SIGNAL

Fig. 4

3

Fig. 5 A — SWITCHING SIGNAL ON LINE 23

Fig. 5 B — FFI,$\bar{Q}$ $\begin{cases} I = 0° \\ 0 = 90° \end{cases}$

Fig. 5 C — FF2,Q $\begin{cases} I = 180° \\ 0 = 0° \end{cases}$

Fig. 5 D — PHASE SHIFT OF TRANSMITTED SIGNAL ON LINE 21

Fig. 6

Fig. 7

4